# EUROPÄISCHE PATENTSCHRIFT

(11) **EP 4 457 452 B1**
(45) Veröffentlichungstag und Bekanntmachung des Hinweises auf die Patenterteilung: **04.11.2026**
(21) Anmeldenummer: 22830841.7
(22) Anmeldetag: 07.12.2022
(51) Int. Cl.: F16H 25/20

(54) **ELEKTROMECHANISCHER ZYLINDER**
ELECTROMECHANICAL CYLINDER
CYLINDRE ÉLECTROMÉCANIQUE

(30) Priorität: 28.12.2021 DE 102021006442
(43) Veröffentlichungstag der Anmeldung: 06.11.2024
(73) Patentinhaber: HYDAC Systems & Services GmbH, 66280 Sulzbach (DE)
(72) Erfinder: SCHEIDT, Michael, 66292 Riegelsberg (DE); SCHWARZ, Felix Anton, 66117 Saarbrücken (DE)
(74) Vertreter: Bartels und Partner, Patentanwälte
(86) Internationale Anmeldenummer: PCT/EP2022/084788
(87) Internationale Veröffentlichungsnummer: WO 2023/126138

(56) Entgegenhaltungen:
- WO-A1-2021/044926
- DE-U1- 20 108 706
- JP-A- H06 344 187
- US-B2- 9 415 557

## Beschreibung

Die Erfindung betrifft einen elektromechanischen Zylinder mit den Merkmalen im Oberbegriff von Anspruch 1.

Durch DE 10 2019 004 690 A1 ist ein Linearantriebssystem bekannt mit einem mittels eines Elektromotors translatorisch verfahrbaren Betätigungsteil, das mit einem mechanischen Energiespeicher derart gekoppelt ist, dass bei einem Energieverlust am elektrischen Antrieb respektive im Notbetrieb das Betätigungsteil eine vorgebbare Position einnimmt und dabei eine Stellkraft ausübt. Dergestalt ist ein Linearantriebssystem in Form eines elektromechanischen Zylinders geschaffen, das auch im lang andauernden Betrieb und frei von etwaigen Änderungen der Umgebungsbedingungen, wie der Temperatur, störungsfrei seine Funktion wahrnimmt. Durch den Einsatz eines mechanischen Energiespeichers anstelle eines sonst üblichen Gasspeichers ist eine rein mechanische Lösung geschaffen, die dem Grund nach für ihre Funktion keinen zusätzlichen Wartungsaufwand erfordert, wie beispielsweise ein Nachfüllen des Arbeitsgases bei der bekannten Gasfeder.

Die WO 2021/044926 A1 beschreibt einen elektromechanischen Zylinder mit den Merkmalen im Oberbegriff von Anspruch 1 mit einem Gewindetrieb, der das eingeleitete Motor-Drehmoment eines Elektromotors in eine lineare Bewegung für ein Betätigungsteil umwandelt, wobei mittels einer Sensoreinrichtung mindestens eine Kraft erfasst ist, die auf das Betätigungsteil einwirkt, wobei die Sensoreinrichtung einen Sensor aufweist, der eine Zugkraft auf das Betätigungsteil erfasst, und einen Sensor aufweist, der eine Druckkraft auf das Betätigungsteil erfasst, wobei ein Getriebe mindestens ein Getriebeteil aufweist, das den Elektromotor mit einer Gewindespindel koppelt, die über eine Gewindemutter einen Führungskörper bewegt, an dem das Betätigungsteil angreift, wobei das Betätigungsteil aus einem Schubrohr gebildet ist, das zumindest teilweise die Gewindespindel umfasst und das in einem Gehäuserohr längsverfahrbar mittels des Führungskörpers geführt ist, und wobei die Sensoreinrichtung in einer Lagereinrichtung aufgenommen ist, die zwischen einem Getriebegehäuse und dem Gehäuserohr angeordnet von der Gewindespindel durchgriffen ist, die in der Lagereinrichtung mittels Lagerstellen in axialer und radialer Richtung gelagert ist.

Weitere elektromechanische Zylinder gehen aus der DE 201 08 706 U1, der US 9 415 557 B2 und der JP H06-344187 A hervor.

Ausgehend von diesem Stand der Technik liegt der Erfindung die Aufgabe zugrunde, dahingehende elektromechanische Zylinder respektive Linearantriebssysteme von ihrer Funktionalität her zu verbessern.

Eine dahingehende Aufgabe löst ein elektromechanischer Zylinder mit den Merkmalen des Patentanspruchs 1 in seiner Gesamtheit.

Gemäß dem Kennzeichen von Anspruch 1 ist vorgesehen, dass der eine Sensor und der andere Sensor jeweils zwischen einem Axiallager und einem gemeinsamen Radiallager in der Lagereinrichtung aufgenommen sind.

Dadurch, dass mittels einer Sensoreinrichtung mindestens eine Kraft erfasst ist, die auf das Betätigungsteil des Linearantriebssystems einwirkt, ist eine integrierte Kraftmessung im Rahmen elektromechanischer Aktoren respektive Zylinder erreicht, so dass die Möglichkeit eröffnet ist, das Betätigungsteil des Zylinders in Form einer Betätigungsstange oder eines sog. Schubrohrs im Rahmen der zu erzielenden Kräfteübertragung auf ein Drittbauteil und/oder einen ggf. unzulässig hohen Krafteintrag von Seiten eines solchen Drittbauteils zu überwachen bzw. festzustellen. Insbesondere besteht die Möglichkeit festzustellen, ob die mittels des Gewindetriebs seitens des Betätigungsteils aufzubringende Kraft im Rahmen einer Aus- und/oder Einfahrbewegung genügt, um eine sichere Betätigung an dem Drittbauteil zu veranlassen und ob insbesondere hierfür das seitens des elektrischen Antriebs aufzubringende Motor-Drehmoment ausreicht oder entsprechend über die Steigerung der Motorleistung zu erhöhen ist. Über die Ermittlung des Kräfteeintrags auf das Betätigungsteil lässt sich direkt auch die Kraft für das Betätigungsteil ermitteln, das für einen funktionssicheren Betrieb vorgegebene Grenzen nicht überschreiten darf. Insbesondere besteht der Gewindetrieb aus den Komponenten Gewindespindel und Getriebemutter.

Die Sensoreinrichtung weist einen Sensor, der eine Zugkraft auf das Betätigungsteil erfasst, und einen Sensor auf, der eine Druckkraft auf das Betätigungsteil erfasst. Dergestalt lassen sich in den beiden Haupt-Zustellrichtungen "Ausfahren und Einfahren" die hierbei auftretenden Kräfte feststellen, wobei bei links- oder rechtsdrehendem Gewindetrieb die eine oder andere Zustellrichtung vorgegeben ist. Die dahingehende Kraftermittlung über die Sensoreinrichtung ist auch dann gegeben, sofern das Betätigungsteil an einem Drittbauteil angreifend dessen jeweiliger Lastsituation ausgesetzt ist.

Die Sensoreinrichtung ist in einer Lagereinrichtung aufgenommen, die zwischen einem das Getriebe aufnehmenden Getriebegehäuse und dem Gehäuserohr angeordnet von der Getriebespindel durchgriffen ist, die in der Lagereinrichtung mittels Lagerstellen in axialer und radialer Richtung gelagert ist. Der eine Sensor und der andere Sensor sind jeweils zwischen einem Axiallager und einem gemeinsamen Radiallager in der Lagereinrichtung aufgenommen. Die Lagereinrichtung kann dabei in der Art eines stationär angeordneten Lagerbocks ausgebildet sein und an zentraler Stelle platzsparend zwei voneinander verschiedene Funktionen erfüllen, nämlich einmal eine Lagerung für die drehbare Gewindespindel zur Verfügung zu stellen sowie einen Aufnahmeraum für die Sensoreinrichtung mit ihrem jeweiligen Sensor zu bilden.

Als besonders vorteilhaft hat es sich erwiesen, den jeweiligen Sensor der Sensoreinrichtung mittels Dehnungsmessstreifen zu realisieren, die zu Erfassung von dehnenden und stauchenden Verformungen geeignet sind. So können Dehnungsmessstreifen üblicher Bauart schon bei geringen Verformungen ihren elektrischen Widerstand ändern und insoweit als Dehnungssensoren eingesetzt werden. Sie sind als Zukaufteile standardisiert auf dem Markt frei erhältlich und man kann sie mit entsprechender Messverkabelung versehen auf nahezu beliebigen Bauteilen fixieren, insbesondere festkleben, und selbst wenn diese sich unter Belastung nur minimal verformen sollten, genügt diese Verformung jedenfalls, um eine Veränderung des Widerstands am jeweiligen Dehnungsmessstreifen festzustellen, die sich messtechnisch auswerten lässt.

In besonders vorteilhafter Weise ist vorgesehen, dass der Gewindetrieb ein Getriebe aufweist, das den Elektromotor mit einer Gewindespindel koppelt, die einen Führungskörper mittels einer Gewindemutter bewegt, an dem das Betätigungsteil angreift. Insbesondere bei Einsatz eines Riemengetriebes ist ein Zugmittelgetriebe geschaffen, das sich kostengünstig realisieren lässt und wenig Einbauraum an der Linearantriebseinheit in Form des elektromechanischen Zylinders benötigt. Insbesondere ergibt sich ein ruhiger und geräuscharmer Lauf bei geringer Wartung und sollte es kurzzeitig ungewollt zu Überlastungen kommen, kann dies über den sog. Riemenschlupf ausgeglichen werden. Des Weiteren benötigt das Riemengetriebe in der Umsetzung nur ein geringes Einbaugewicht, was dem elektromechanischen Zylinder in vorteilhafter Weise bei der Handhabung zugutekommt, sofern dieser von Hand transportiert und montiert an sonstigen Maschinenteilen für seine Funktionsausübung anzubringen ist. Anstelle eines Riemengetriebes kann auch bei der Realisierung eine andere Getriebeart gewählt werden. So besteht auch die Möglichkeit, anstelle eines winkligen ein geradliniges Antriebskonzept zu realisieren, bei dem die Abtriebswelle eines Elektromotors konzentrisch zur Gewindespindel angeordnet ist, mit dieser über eine Kupplung koppelbar verbunden ist.

Bei einer bevorzugten Ausführungsform des elektromechanischen Zylinders ist vorgesehen, dass das Betätigungsteil aus einem Schubrohr gebildet ist, das zumindest teilweise die Gewindespindel umfasst und das in einem Gehäuserohr längsverfahrbar mittels einer Führungseinrichtung unter Einsatz des Führungskörpers geführt ist. Dank des Gehäuserohrs ist das Schubrohr vor Verschmutzungen aus der Umgebung geschützt. Da das Schubrohr in jedem seiner Verfahrzustände nach außen hin die Gewindespindel umfasst, sind auch insoweit die empfindlichen Gewindegänge der Gewindespindel vor Beeinträchtigungen aus der Umgebung geschützt. Aufgrund der hohlen Ausgestaltung des Schubrohrs sind auch nur geringe Massen mittels des Gewindetriebs linear zu verfahren, was die benötigte Antriebsleistung seitens des Elektromotors reduzieren hilft.

Bei einer bevorzugten Ausführungsform des elektromechanischen Zylinders ist vorgesehen, dass die Führungseinrichtung den Führungskörper aufweist, der zwischen Gewindespindel und Betätigungsteil angeordnet gegenüber dem Gehäuserohr im Rahmen einer Längsführung eine Verdrehsicherung für das Betätigungsteil bildet. Dergestalt ist eine ungewollte, relative Drehbewegung zwischen Gehäuse- und Schubrohr verhindert, wobei der Führungskörper längsverfahrbar im Gehäuserohr geführt ist. Je nach Drehrichtung der Gewindespindel ist die jeweilige Ein- oder Ausfahrbewegung für das Betätigungsteil in Form des Schubrohrs veranlasst.

Dabei ist vorzugsweise vorgesehen, dass der jeweilige Sensor aus einem Ringkörper gebildet ist, der den jeweiligen Dehnungsmessstreifen aufweist und von der Gewindespindel durchgriffen ist. Die hier angesprochenen Ringkörper bilden in besonders vorteilhafter Weise eine Art Membran aus, die von den Kräften am Betätigungsteil beansprucht über die auf der Membran jeweils angebrachten Dehnungsmessstreifen eine zeitnahe Belastungsaufnahme ermöglichen. Aufgrund des Membrancharakters des Ringkörpers ist auch sichergestellt, dass bei Wegfall der Krafteinleitung die Membran sich in ihren ursprünglichen Zustand wieder rückstellt, ohne dass durch Hystereseerscheinungen das Messergebnis verfälscht werden könnte.

Besonders bevorzugt für den elektromechanischen Zylinder ist dabei vorgesehen, dass die Gewindespindel an ihrer dem Getriebe zugewandten Seite von einer Nutmutter in axialer Verschieberichtung gesichert ist, die sich an einem benachbart angeordneten Axiallager abstützt und dass auf der gegenüberliegenden Seite der Lagereinrichtung die Gewindespindel an dem anderen Axiallager flächig anliegt. Dergestalt lässt sich die Kraftaufnahme an dem jeweiligen Axiallager an die benachbarten Ringkörper der Sensoreinrichtung linear weitergeben, so dass sich auch insoweit je nach Kraftwertaufnahme hieraus Rückschlüsse auf die Funktionsfähigkeit der einzelnen Lagerstellen innerhalb des Lagerbocks ergeben und dergestalt kann im Bedarfsfall bei sich abzeichnendem Versagen eines Lagers dieses gegen ein Neulager getauscht werden. Dies hat so keine Entsprechung im Stand der Technik.

Im Folgenden wird der elektromechanische Zylinder anhand eines Ausführungsbeispiels nach der Zeichnung näher erläutert. Dabei zeigen in prinzipieller und nicht maßstäblicher Darstellung die
- Fig. 1: eine perspektivische Ansicht auf den erfindungsgemäßen elektromechanischen Zylinder;
- Fig. 2: teilweise in Ansicht, teilweise im Längsschnitt den Zylinder nach der Fig. 1;
- Fig. 3: eine vergrößerte Darstellung eines Ausschnitts in Fig. 2; und
- Fig. 4: in perspektivischer Draufsicht einen Ringkörper mit aufgebrachten Dehnungsmessstreifen als wesentliche Komponenten eines Sensors.

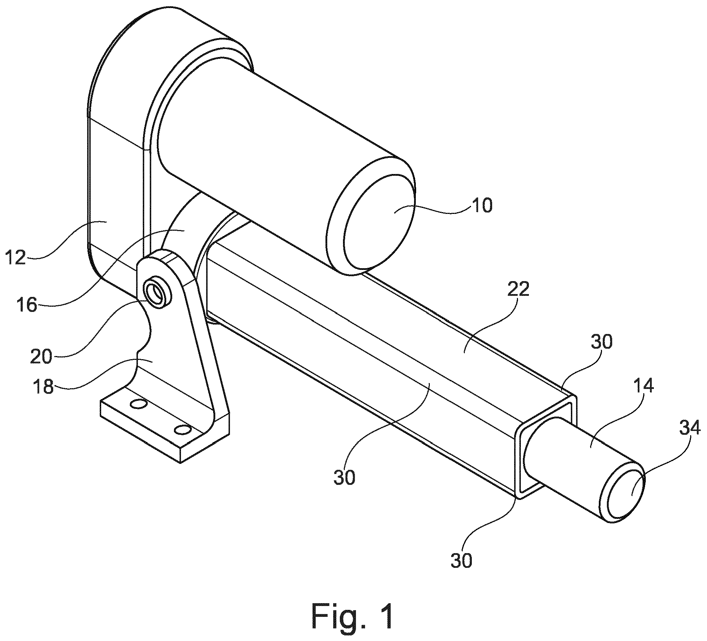

Fig. 1 zeigt einen erfindungsgemäßen elektromechanischen Zylinder, der auch mit Linearantriebssystem bezeichnet ist, mit einem Elektromotor 10 und einem Getriebe 12, das das eingeleitete Motor-Drehmoment des Elektromotors 10 in eine lineare Bewegung für ein Betätigungsteil 14 umwandelt. Der dahingehend ausgestaltete elektromechanische Zylinder ist über eine Lagereinrichtung 16 in Form eines Lagerbockes über zwei einander gegenüberliegende Winkelstützen 18 schwenkbar um eine Drehachse 20 gelagert.

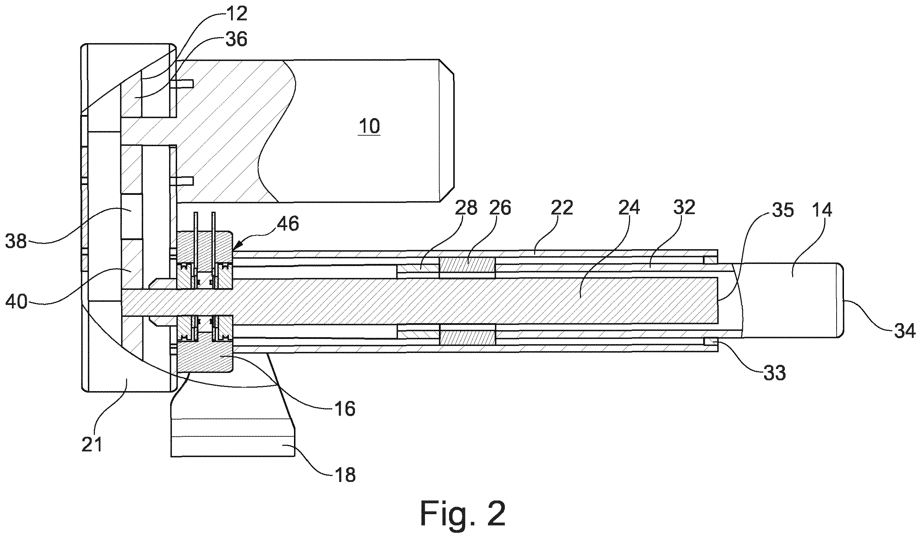

Wie sich aus der Schnittdarstellung nach der Fig. 2 ergibt, weist das in einem Getriebekasten 21 aufgenommene Getriebe 12 eine in einem Gehäuserohr 22 drehbar geführte Gewindespindel 24 auf, die über eine mit ihr in Eingriff befindliche Gewindemutter 28 mit einem Führungskörper 26 einer Führungseinrichtung zusammenwirkt. Im vorliegenden Ausführungsbeispiel ist die Gewindemutter 28 mit der Gewindespindel 24 im Eingriff, in dem das Außengewinde der Gewindespindel 24 unter Bildung des Gewindetriebes in permanentem Eingriff mit dem zugehörigen Innengewinde der Gewindemutter 28 ist.

An die Gewindemutter 28 schließt sich des Weiteren an ihrem freien Ende, das dem Getriebe 12 abgewandt ist, der ringförmige Führungskörper 26 an, der mittig unter Beibehalten eines vorgebbaren spaltartigen Abstandes von der Gewindespindel 24 in seiner Längsrichtung vollständig durchgriffen ist.

Außenumfangsseitig ist der Führungskörper 26 an die Innenkontur des Gehäuseteiles 22 als weiterem Teil der Führungseinrichtung angepasst, das einen Außenmantel für den Zylinder respektive ein Spindelgehäuse bildet.

Sowohl die Gewindemutter 28 als auch der an ihr befestigte Führungskörper 26 sind demgemäß um die Längsachse der Gewindespindel 24 unverdrehbar, aber translatorisch entlang dieser Längsachse bewegbar und dergestalt mit ihrem Außenumfang entlang der Innenwand des Gehäuserohres 22 geführt. Hierfür ist das Gehäuserohr 22 auf seiner Innenseite hohl ausgebildet und weist einen nicht-rotationssymmetrischen, insbesondere einen mehreckförmigen vorzugsweise rechteckigen oder quadratischen Innenquerschnitt, insbesondere mit abgerundeten Kanten 30 an der Stelle des Überganges, auf. Insoweit entspricht der Außenquerschnitt des Führungskörpers 26 im Wesentlichen dem gewählten Innenquerschnitt des Gehäuserohrs 22.

Die Gewindespindel 24 ist als Zylinderstange ausgebildet, die am Außenumfang das Außengewinde trägt, das mit dem Innengewinde am Innenumfang der Gewindemutter 28 in Eingriff ist. Das Betätigungsteil 14 bildet ein Schubrohr 32 aus, das mit dem freien, der Gewindemutter 28 abgewandten Ende des Führungskörpers 26 fest verbunden, drehfest im Gehäuserohr 22 längsverfahrbar geführt ist. Die Anordnung ist jedenfalls derart getroffen, dass auch bei maximal ausgefahrenem Schubrohr 32 in jedem Fall der Führungskörper 26 mit der zugehörigen Gewindemutter 28 im Gehäuserohr 22 verbleibt, das an seinem freien, zur Umgebung hin gewandten Ende eine Anschlagmöglichkeit in Form eines nach innen vorstehenden Ringrandes 33 aufweist, gegen den das Führungsteil 26 als äußerste Begrenzung verfahren werden kann.

Wie sich des Weiteren aus den Fig. 1 und 2 ergibt, ist das Schubrohr 32 jedenfalls in jeder seiner Verfahrstellungen teilweise im Gehäuserohr 22 angeordnet und ragt teilweise mit seinem freien, nach vorne vorstehenden Ende 34 aus dem Gehäuserohr 22 hervor. Das Schubrohr 32 kann in entgegengesetzter Richtung maximal in das Gehäuserohr 22 so lange einfahren, bis das freie stirnseitige Ende 35 der Gewindespindel 24 in Anlage oder nahezu in Anlage mit der benachbart gegenüberliegenden Innenwand des Schubrohrs 32, an dessen freiem Ende 34 kommt. Eine andere Möglichkeit der Begrenzung der Einfahrbewegung für das Schubrohr 32 besteht darin, dass die Gewindemutter 28 mit ihrem freien stirnseitigen Ende in oder annähernd in benachbarte Anlage mit Teilen der Lagereinrichtung 16 kommt.

Zur Übertragung der Antriebsleistung des Elektromotors 10 dient eine Abtriebsscheibe 36, die in üblicher Weise über einen Riementrieb 38 eine Antriebsscheibe 40 antreibt, die fest mit der Gewindespindel 24 verbunden ist. Hierfür ist in Blickrichtung auf die Fig. 2 gesehen die Gewindespindel 24 an ihrem linken Ende im Durchmesser reduziert. Das Getriebegehäuse 21 umfasst den Riementrieb 38 sowie die beiden Scheiben 36, 40. Der Elektromotor 10 sowie die wesentlichen Teile des Zustellzylinders sind mit ihrer jeweiligen Längsachse parallel zueinander angeordnet und auf einer Seite am Getriebegehäuse 21 vorstehend an diesem fest angeordnet, beispielsweise mit diesem fest verschraubt und/ oder verstiftet.

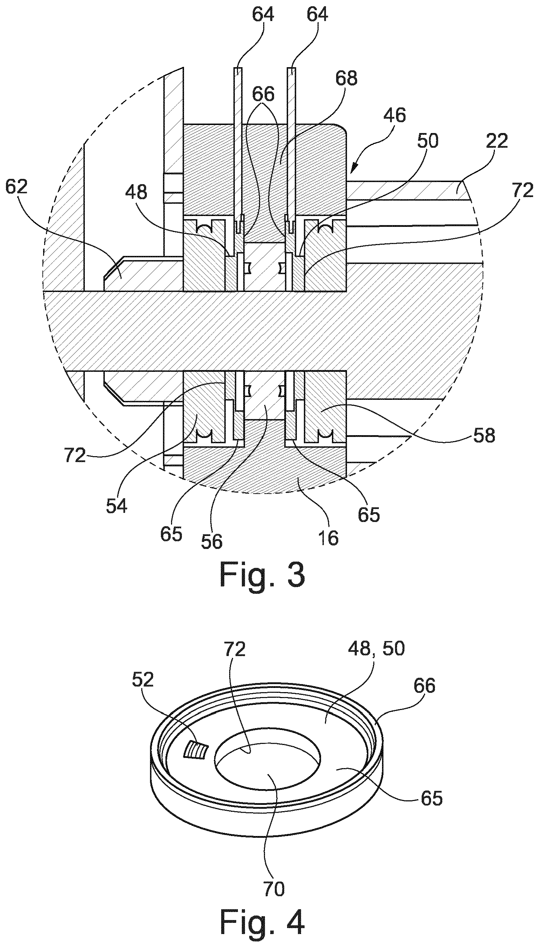

Wie sich insbesondere aus der um den Faktor 2 vergrößerten Darstellung nach der Fig. 3 ergibt, ist in der Lagereinrichtung 16 respektive dem Lagerbock als Ganzes eine Sensoreinrichtung 46 aufgenommen. Die genannte Sensoreinrichtung 46 weist einen Sensor 48, der eine Zugkraft auf das Betätigungsteil 14 erfasst sowie einen weiteren Sensor 50 auf, der in entgegengesetzter Richtung eine Druckkraft auf das Betätigungsteil 14 erfasst. Damit eine solche Zugkraft auf das Betätigungsteil 14 einwirken kann, ist in Blickrichtung auf die Fig. 2 gesehen das Betätigungsteil 14 mit einer rechtswirkenden Kraft zu beaufschlagen und im Fall einer ausgeübten Druckkraft ist das Betätigungsteil 14 mit einem entsprechenden Kraftvektor entlang seiner Längsachse nach links beaufschlagt. Damit der jeweilige Sensor 48, 50 die genannten Kräfte auf das Betätigungsteil 14 erfassen kann, sind Dehnungsmessstreifen 52 vorgesehen, die nur beispielhaft in der Fig. 4 an einer Stelle wiedergegeben sind.

Wie sich des Weiteren aus der Fig. 3 ergibt, stützt sich der Sensor 48 zwischen dem benachbarten Axiallager 54 und dem Lagerbock 16 ab. Der weitere Sensor 50 hingegen, stützt sich zwischen dem Axiallager 58 und gleichfalls dem Lagerbock 16 ab. Der jeweils angesprochene Sensor 48 oder 50 stützt sich in Blickrichtung auf die Fig. 3 gesehen, in radialer Richtung sowohl nach außen oben als auch nach außen unten stirnseitig am Lagerbock 16 ab, so dass ein Kraftfluss Richtung Mitte zeigend entsteht. Das zwischen den beiden Axiallagern 54 und 58 angeordnete Radiallager 56 hat keinen Kontakt mit den vorstehend genannten Sensoren 48 und 50 und dient nur der Abstützung der Gewindespindel 24 während des Drehantriebes.

Jeder Sensor 48, 50 der Sensoreinrichtung 46 verfügt dabei über einen eigenen elektrischen Messanschluss 64, mit dem die Messwertdaten an eine nicht näher dargestellte Auswerteelektronik weitergegeben werden können.

Fig. 4 zeigt nun den ringförmigen Aufbau eines Sensors 48, 50 in gleicher Bauart. Der Sensorring 65 weist außenumfangsseitig einen nach oben hin vorspringenden Rand 66 auf, der gemäß der Darstellung nach der Fig. 3 sich an einer flanschartigen, ringförmigen Verbreiterung 68 auf der Innenseite der Gehäusewandung der Lagereinrichtung 16 abstützt, die einen Aufnahmeraum bildet für die bündige Aufnahme des mittigen Radiallagers 56. In Richtung einer Mittenöffnung 70, die dem Durchgriff der Gewindespindel 24 dient, ist benachbart auf der gegenüberliegenden Seite des Randes 66 ein weiterer, in Blickrichtung auf die Fig. 4 gesehen, nach unten vorspringender Rand 72 vorhanden, der sich gemäß der Darstellung nach der Fig. 3 für jeden Sensor 48, 50 am drehenden Innenring des Axiallagers 54, 58 abstützt.

Kommt es nun zu einer Druckbelastung auf das Betätigungsteil 14 wird über den Führungskörper 26 respektive die Gewindemutter 28 nach Herstellen der Spielfreiheit eine Kraft auf die Gewindespindel 24 ausgeübt, die über eine zylindrische Verbreiterung 60 auf den drehenden Innenring des rechts angeordneten Axiallagers 58 wirkt und die dahingehende Krafteinleitung wird auf den weiteren Sensor 50 eingebracht, was eine Verformung der Dehnmessstreifenanordnung 52 bewirkt, sodass dergestalt die sich hierdurch ergebende Verformungsgröße als Druckkrafteinwirkung auf das Betätigungsteil 14 auswerten lässt. Da eine Nutmutter 62 sich im Hinblick auf den Druckkrafteintrag auf die Gewindespindel 24 in Blickrichtung auf die Fig. 3 geringfügig nach links bewegt und insoweit entlastet wird, ist auch das linke Axiallager 54 im Umfang seines Innenringes entlastet und damit auch der links angeordnete Sensor 48. Die angesprochene Nutmutter 62 legt dabei den Lagerverbund mit den Lagern 54, 56, 58 und den Sensoren 48, 50 gegen die Verbreiterung 60 der Gewindespindel 24 fest an.

Kommt es nunmehr entgegengesetzt zu einer Zugkrafteinwirkung auf das Betätigungsteil 14 wird wiederum über den Führungskörper 26 der Gewindemutter 28 eine auf die Gewindespindel 24 nach rechts einwirkende Kraft aufgebracht, was die aufgeschraubte Nutmutter 62 belastet und zu einer Kraftausübung nach rechts auf die drehende Innenringkomponente des linken Axiallagers 54 wirkt. Die dahingehend drehenden Innenringteile des Axiallagers 54 wirken dann wiederum auf den weiteren Rand 72 in Form des Umfassungsrandes, der sich wiederum über seinen äußeren Rand 66 stationär an der ringförmigen Verbreiterung 68 der Lagereinrichtung 16 abstützt. Auch insoweit kommt es dann zu einer Verformung an dem in Fig. 4 gezeigten Ringkörper 65 mit entsprechender Verformung der Dehnungsmessstreifen 52, was ein Messwertsignal am Anschluss 64 erzeugt und einen Rückschluss über die Höhe der eingeleiteten Zugkraft auf das Betätigungsteil 14 ergibt. Aufgrund der ringförmigen Anordnung beider Sensoren 48, 50 mit ihren vorstehenden Rändern 66, 72 ergibt sich nach Wegfall der Kraft unmittelbar wieder eine Rückstellung und die insoweit nicht mehr verformten oder bewegten Dehnungsmessstreifen 52 liefern ein Messignal von Null, das heißt, dass Betätigungsteil 14 ist frei von axialwirkenden Zug- oder Druckkräften. Es versteht sich, dass im Rahmen der Messwertauswertung auch ein anderer Grundwert als Null als Ausgangspunkt für die Messwerterfassung gewählt werden kann.

Die angesprochenen Ränder 66 und 72 am jeweiligen Sensorring können auch zumindest auf einer Seite entfallen. So besteht die Möglichkeit, die dem jeweiligen Axiallager 54, 58 gegenüberliegende Scheibe des Sensorringes 65 eben auszugestalten. Für eine ungestörte Membranverformung ist dann jedenfalls vorgesehen, dass das mittig angeordnete Radiallager 56 von seinem Außenumfang her im Durchmesser kleiner gewählt ist als der durch den Rand 66 begrenzte Innendurchmesser, gesehen in Richtung der Mittenöffnung 70 des Sensorringes 65. Des Weiteren sind die stationär in der Lagereinrichtung 16 angeordneten Sensorringe 65 für den Zugsensor 48 und den Drucksensor 50 in der Lage, ein Abgleiten der Innenringe des jeweils zugeordneten Axiallagers 54, 58 zu ermöglichen. Es besteht aber auch die Möglichkeit, die beiden Sensoren 48, 50 mit der Gewindespindel 24 mit drehen zu lassen, wobei dann die Messanschlüsse 64 in der Art von Schleifkontakten die ermittelten Messwerte der Dehnungsmessstreifen 52 an die Auswerteelektronik weiterleiten. Ferner kann im Bedarfsfall nur ein Sensor 48 oder 50 Verwendung finden, sofern man nur Zug- oder Druckkräfte überwachen möchte.

## Patentansprüche

1. Elektromechanischer Zylinder mit einem Gewindetrieb, der das eingeleitete Motor-Drehmoment eines Elektromotors (10) in eine lineare Bewegung für ein Betätigungsteil (14) umwandelt, wobei mittels einer Sensoreinrichtung (46) mindestens eine Kraft erfasst ist, die auf das Betätigungsteil (14) einwirkt,
wobei die Sensoreinrichtung einen Sensor (48) aufweist, der eine Zugkraft auf das Betätigungsteil (14) erfasst, und einen Sensor (50) aufweist, der eine Druckkraft auf das Betätigungsteil (14) erfasst,
wobei ein Getriebe (12) mindestens ein Getriebeteil (36, 38, 40) aufweist, das den Elektromotor (10) mit einer Gewindespindel (24) koppelt, die über eine Gewindemutter (28) einen Führungskörper (26) bewegt, an dem das Betätigungsteil (14) angreift,
wobei das Betätigungsteil (14) aus einem Schubrohr (32) gebildet ist, das zumindest teilweise die Gewindespindel (24) umfasst und das in einem Gehäuserohr (22) längsverfahrbar mittels des Führungskörpers (26) geführt ist, und
wobei die Sensoreinrichtung (46) in einer Lagereinrichtung (16) aufgenommen ist, die zwischen einem Getriebegehäuse (21) und dem Gehäuserohr (22) angeordnet von der Gewindespindel (24) durchgriffen ist, die in der Lagereinrichtung (16) mittels Lagerstellen (54, 56, 58) in axialer und radialer Richtung gelagert ist,
**dadurch gekennzeichnet,**
**dass** der eine Sensor (48) und der andere Sensor (50) jeweils zwischen einem Axiallager (54, 58) und einem gemeinsamen Radiallager (56) in der Lagereinrichtung (16) aufgenommen sind.

2. Elektromechanischer Zylinder nach Anspruch 1, **dadurch gekennzeichnet, dass** der jeweilige Sensor (48, 50) mittels Dehnungsmessstreifen (52) die jeweilige Kraft auf das Betätigungsteil (14) erfasst.

3. Elektromechanischer Zylinder nach einem der vorstehenden Ansprüche, **dadurch gekennzeichnet, dass** eine Führungseinrichtung den Führungskörper (26) aufweist, der zwischen Gewindespindel (24) und Betätigungsteil (14) angeordnet gegenüber dem Gehäuserohr (22) im Rahmen einer Längsführung eine Verdrehsicherung für das Betätigungsteil (14) bildet.

4. Elektromechanischer Zylinder nach einem der vorstehenden Ansprüche, **dadurch gekennzeichnet, dass** der jeweilige Sensor (48, 50) aus einen Ringkörper (65) aufweist, der den jeweiligen Dehnungsmessstreifen (52) trägt und von der Gewindespindel (24) durchgriffen ist.

5. Elektromechanischer Zylinder nach einem der vorstehenden Ansprüche, **dadurch gekennzeichnet, dass** die Gewindespindel (24) an ihrer dem Getriebe (36, 38, 40) zugewandten Seite von einer Nutmutter (62) in axialer Verschieberichtung gesichert ist, die sich an einem benachbart angeordnetem Axiallager (54) abstützt und dass auf der gegenüberliegenden Seite der Lagereinrichtung (16) die Gewindespindel (24) mit einer Radialerweiterung an dem anderen Axiallager (58) flächig anliegt.

## Claims

1. Electromechanical cylinder having a screw drive which converts the applied motor torque of an electric motor (10) into a linear movement for an actuating part (14), at least one force acting on the actuating part (14) being detected by means of a sensor device (46),
the sensor device comprising a sensor (48) that detects a tensile force on the actuating part (14) and a sensor (50) that detects a compressive force on the actuating part (14),
a transmission unit (12) comprising at least one transmission part (36, 38, 40), which couples the electric motor (10) to a threaded spindle (24), which, via a threaded nut (28), moves a guide body (26) on which the actuating part (14) engages,
the actuating part (14) being formed by a thrust tube (32), which at least partially surrounds the threaded spindle (24) and which is guided in a housing tube (22) in a longitudinally displaceable manner by means of the guide body (26), and
the sensor device (46) being received in a bearing device (16), which is arranged between a transmission housing (21) and the housing tube (22) and through which the threaded spindle (24), which is mounted in the axial and radial direction in the bearing device (16) by means of bearing points (54, 56, 58), passes,
**characterised in that**
one sensor (48) and the other sensor (50) are in each case received between an axial bearing (54, 58) and a shared radial bearing (56) in the bearing device (16).

2. Electromechanical cylinder according to claim 1, **characterised in that** the respective sensor (48, 50) detects the respective force on the actuating part (14) by means of strain gauges (52).

3. Electromechanical cylinder according to any of the preceding claims, **characterised in that** a guide device comprises the guide body (26), which is arranged between the threaded spindle (24) and the actuating part (14) and forms an anti-rotation device for the actuating part (14) opposite the housing tube (22) as part of a longitudinal guide.

4. Electromechanical cylinder according to any of the preceding claims, **characterised in that** the respective sensor (48, 50) comprises an annular body (65) which bears the respective strain gauges (52) and through which the threaded spindle (24) passes.

5. Electromechanical cylinder according to any of the preceding claims, **characterised in that**, on its side facing the transmission unit (36, 38, 40), the threaded spindle (24) is secured in the axial displacement direction by a slotted nut (62), which is supported on an adjacently arranged axial bearing (54), and **in that**, on the opposite side of the bearing device (16), the threaded spindle (24) lies flat on the other axial bearing (58) with a radial extension.

## Revendications

1. Cylindre électromécanique comprenant une transmission filetée, qui transforme le couple appliqué d'un moteur (10) électrique en un mouvement linéaire d'une partie (14) d'actionnement, dans lequel, au moyen d'un dispositif (46) capteur, est détecté au moins une force, qui s'applique à la partie (14) d'actionnement,
dans lequel le dispositif capteur a un capteur (48), qui détecte une force de traction sur la partie (14) d'actionnement, et a un capteur (50), qui détecte une force de poussée sur la partie (14) d'actionnement,
dans lequel une transmission (12) a au moins une partie (36, 38, 40) de transmission, qui accouple le moteur (10) électrique à une broche (24) filetée, laquelle, par un écrou (28) fileté, déplace un corps (26) de guidage, que la partie (14) d'actionnement attaque,
dans lequel la partie (14) d'actionnement est formée d'un tube (32) pousseur, qui entoure au moins en partie la broche (24) filetée et qui est guidé, au moyen du corps (26) de guidage avec possibilité de se déplacer longitudinalement, dans un tube (22) d'enveloppe, et
dans lequel le dispositif (46) capteur est reçu dans un dispositif (16) à palier, qui, monté entre un carter (21) de transmission et le tube (22) d'enveloppe est traversé par la broche (24) filetée, qui, dans le dispositif (16) de palier, est montée au moyen de points (54, 56, 58) d'appui dans la direction axiale et radiale,
**caractérisé**
**en ce que** le un capteur (48) et l'autre capteur (50) sont reçus respectivement entre un palier (54, 58) axial et un palier (56) radial commun dans le dispositif (16) de palier.

2. Cylindre électromécanique suivant la revendication 1, **caractérisé en ce que** le capteur (48, 50) respectif détecte la force respective sur la partie (14) d'actionnement au moyen de jauges (52) de contrainte.

3. Cylindre électromécanique suivant l'une des revendications précédentes, **caractérisé en ce qu'**un dispositif de guidage a le corps (26) de guidage, qui, disposé entre la broche (24) filetée et la partie (14) d'actionnement, forme, en vis-à-vis du tube (22) d'enveloppe dans le cadre d'un guidage longitudinal, une sécurité à la torsion pour la partie (14) d'actionnement.

4. Cylindre électromécanique suivant l'une des revendications précédentes, **caractérisé en ce que** le capteur (48, 50) respectif comporte un corps (65) annulaire, qui porte la jauge (52) respective de contrainte et dans lequel passe la broche (24) filetée.

5. Cylindre électromécanique suivant l'une des revendications précédentes, **caractérisé en ce que** la broche (24) filetée est, sur son côté, tourné vers la transmission (36, 38, 40), fixée dans la direction axiale de déplacement par un écrou (62) à encoche, qui s'appuie sur un palier (54) axial disposé au voisinage et **en ce que**, du côté opposé du dispositif (16) de palier, la broche (24) filetée s'applique par une surface par un élargissement radial à l'autre palier (58) axial.
